(19) Europäisches Patentamt
European Patent Office
Office européen des brevets

(11) **EP 2 696 354 A1**

(12) **EUROPEAN PATENT APPLICATION**
published in accordance with Art. 153(4) EPC

(43) Date of publication:
**12.02.2014 Bulletin 2014/07**

(51) Int Cl.:
*H01B 5/14* (2006.01)    *B32B 7/02* (2006.01)
*B32B 27/30* (2006.01)    *G06F 3/041* (2006.01)
*H01B 13/00* (2006.01)

(21) Application number: **12767580.9**

(22) Date of filing: **05.04.2012**

(86) International application number:
**PCT/JP2012/059399**

(87) International publication number:
**WO 2012/137883 (11.10.2012 Gazette 2012/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.04.2011   JP 2011084529**

(71) Applicant: **Teijin Limited**
**Osaka-shi, Osaka 541-0054 (JP)**

(72) Inventors:
• **IMAMURA, Koichi**
  **Tokyo 100-0013 (JP)**

• **ITOU, Haruhiko**
  **Tokyo 100-0013 (JP)**
• **IKEDA, Kouki**
  **Tokyo 100-0013 (JP)**
• **KIMURA, Kazuki**
  **Kitakatsuragi-gun**
  **Nara 636-0003 (JP)**

(74) Representative: **Hallybone, Huw George et al**
**Carpmaels & Ransford LLP**
**One Southampton Row**
**London WC1B 5HA (GB)**

(54) **TRANSPARENT CONDUCTIVE LAMINATE AND TRANSPARENT TOUCH PANEL**

(57)    The purpose of the present invention is to provide a transparent conductive laminate that will not break by being bent. Another purpose of the present invention is to provide a transparent touch panel comprising such a transparent conductive laminate. A transparent conductive laminate of the present invention has a cured resin layer and a transparent conductive layer laminated on at least one face of a transparent organic-polymer substrate. The resin composition constituting the cured resin layer has a recovery rate ($\eta_{IT}$), which is indicated in the following formula, of 60% or less, for a cured resin layer having a thickness of 5 $\mu$m, in an indentation hardness test (testing load: 1 mN) conforming to ISO14577-1: 2002. $\eta_{IT} = W_{elast}/W_{total} \times 100$ (%) (wherein $W_{elast}$ is indentation work (Nm) generated by elastic returning deformation, and $W_{total}$ is mechanical indentation work (Nm)).

Fig.1

EP 2 696 354 A1

## EP 2 696 354 A1

**Description**

TECHNICAL FIELD

The present invention relates to a transparent electroconductive laminate for an electrode substrate of a transparent touch panel. The present invention also relates to a transparent touch panel having such a transparent electroconductive laminate.

BACKGROUND ART

As a man-machine interface, a transparent touch panel capable of realizing an interactive input system has been increasingly used. The transparent touch panel includes, according to the position detection system, an optical system, an ultrasonic wave system, a capacitance system, a resistive film system and the like. In particular, some of capacitance systems and resistive film systems are constituted using a transparent electroconductive laminate formed by stacking a transparent electroconductive layer and the like on at least one surface of a transparent organic polymer substrate.

As the transparent organic polymer substrate, an organic polymer substrate having high transparency, e.g. a cellulose-based film such as triacetyl cellulose (TAC), a polyester-based film such as polyethylene terephthalate (PET) film, a polycarbonate-based film and an amorphous polyolefin-based film, is usually used.

Such a transparent organic polymer substrate is low  in the surface hardness and susceptible to scratching, and therefore the surface of the transparent organic polymer substrate is coated with a resin layer called a cured resin layer. This cured resin layer is known to be useful not only for protecting the surface of the transparent organic polymer substrate, but also for filling fine pores present in the surface of the transparent organic polymer substrate and thereby achieving flattening.

However, the laminate obtained by coating a transparent organic polymer substrate with a hard cured resin layer becomes more brittle than a transparent organic polymer substrate itself not coated with a hard cured resin layer, and therefore is disadvantageously broken when bent. This tendency is prominent in using a substrate having low mechanical strength, such as transparent organic polymer substrate formed of a low-molecular-weight polycarbonate resin or an amorphous polyolefin, and this problem has been considered to be difficult to solve. Breakage of the laminate gives rise to reduction in the handleability at the production of a transparent panel, and is a fatal feature particularly to a substrate for a resistive film-type touch panel requiring mechanical strength.

SUMMARY OF THE INVENTION

PROBLEMS TO BE SOLVED BY THE INVENTION

An object of the present invention is to provide a transparent electroconductive laminate which does not cause cracking due to bending. Another object of the present invention is to provide a transparent touch panel having such a transparent electroconductive laminate.

MEANS TO SOLVE THE PROBLEMS

As a result of intensive studies to attain the above-described objects, the present inventors have found that, when the laminate is bent, an impact of crack formation in a cured resin layer induces cracking of a substrate, and in turn, breakage of the laminate is brought about. Furthermore, the present inventors have found that, by forming a cured resin layer of a resin composition having specific properties, a transparent electroconductive laminate capable of having a surface protecting function, and at the same time, preventing breakage of the laminate is achieved. The present invention described below has been accomplished based on these findings.

<1> A transparent electroconductive laminate, comprising a transparent organic polymer substrate, and a cured resin layer and a transparent electroconductive layer which are stacked on at least one surface of the substrate, wherein the resin composition constituting the cured resin layer has a recovery ratio ($\eta_{IT}$) represented by the following formula of 55% or less, with respect to a 5 $\mu$m-thick cured resin layer and an indentation hardness test in accordance with ISO14577-1:2002 (test load: 1 mN):

$$\eta_{IT} = W_{elast}/W_{total} \times 100 \quad (\%)$$

(wherein $W_{elast}$: an indentation work (Nm) due to elastic return deformation, and $W_{total}$: a mechanical indentation work (Nm)).

<2> The transparent electroconductive laminate according to <1> above, wherein the recovery ratio ($\eta_{IT}$) is 30% or more.

<3> The transparent electroconductive laminate according to <1> or <2> above, wherein the resin composition constituting the cured resin layer has an indentation modulus of 3,000 N/mm$^2$ or more, with respect to a 5 $\mu$m-thick cured resin layer and an indentation hardness test in accordance with ISO14577-1:2002 (test load: 1 mN).

<4> The transparent electroconductive laminate according to any one of <1> to <3> above, wherein the resin composition constituting the cured resin layer is an active energy ray-curable resin composition containing the following component (A):

(A) a polyurethane poly(meth)acrylate oligomer, obtained by reacting the following (a1) to (a3) and having the weight average molecular weight (GPC measurement, in terms of polystyrene) of from 2,500 to 5,000:

(a1) a linear diol having a carbon number of 1 to 5,
(a2) an alicyclic diisocyanate, and
(a3) a monohydroxy poly(meth)acrylate.

<5> The transparent electroconductive laminate according to <4> above, wherein the resin composition constituting the cured resin layer is an active energy ray-curable resin composition containing the component (A) and the following component (B), with the blending ratio (by mass) [(A)/{(A)+(B)}] of from 0.6 to 1.0:

(B) a polyester poly(meth)acrylate monomer having three or more (meth)acryloyl groups per molecule.

<6> The transparent electroconductive laminate according to any one of <1> to <5> above, wherein, on at least one surface of the organic polymer substrate ($\alpha$), the cured resin layer ($\beta$) and the transparent electroconductive layer ($\gamma$) are stacked in any one order of $\alpha/\beta/\gamma$, $\alpha/\gamma/\beta$ and $\alpha/\beta/\gamma/\beta$.

<7> The transparent electroconductive laminate according to any one of <1> to <6> above, wherein the tensile elongation at break of the transparent organic polymer substrate is 20% or less.

<8> The transparent electroconductive laminate according to any one of <1> to <7> above, wherein the transparent organic polymer substrate is one produced by a melting method.

<9> The transparent electroconductive laminate according to any one of <1> to <8> above, wherein the transparent organic polymer substrate is one made of an aromatic polycarbonate.

<10> The transparent electroconductive laminate according to <9> above, wherein the transparent organic polymer substrate is one made of an aromatic polycarbonate having a weight average molecular weight of 20,000 or less.

<11> A transparent electroconductive laminate, comprising a transparent organic polymer substrate, and a cured resin layer and a transparent electroconductive layer which are stacked on at least one surface of the substrate, wherein the resin composition constituting the cured resin layer is an active energy ray-curable resin composition containing the following component (A):

(A) a polyurethane poly(meth)acrylate oligomer, obtained by reacting the following (a1) to (a3) and having the weight average molecular weight (GPC measurement, in terms of polystyrene) of from 2,500 to 5,000:

(a1) a linear diol having a carbon number of 1 to 5,
(a2) an alicyclic diisocyanate, and
(a3) a monohydroxy poly(meth)acrylate.

<12> The transparent electroconductive laminate according to <11> above, wherein the resin composition constituting the cured resin layer is an active energy ray-curable resin composition containing the component (A) and the following component (B), with the blending ratio (by mass) [(A)/{(A)+(B)}] of from 0.6 to 1.0:

(B) a polyester poly(meth)acrylate monomer having three or more (meth)acryloyl groups per molecule.

<13> A transparent touch panel having, as at least one transparent electrode substrate, the transparent electroconductive laminate of any one of <1> to <12> above.

<14> A method for producing a transparent electroconductive laminate, comprising stacking a curable resin layer and a transparent electroconductive layer on at least one surface of a transparent organic polymer substrate, wherein the resin composition constituting the curable resin layer is an active energy ray-curable resin composition containing the following component (A):

(A) a polyurethane poly(meth)acrylate oligomer, obtained by reacting the following (a1) to (a3) and having the weight average molecular weight (GPC measurement, in terms of polystyrene) of from 2,500 to 5,000:

(a1) a linear diol having a carbon number of 1 to 5,
(a2) an alicyclic diisocyanate, and
(a3) a monohydroxy poly(meth)acrylate.

<15> The method for producing a transparent electroconductive laminate according to <14> above, wherein the resin composition is an active energy ray-curable resin composition containing the component (A) and the following component (B), with the blending ratio (by mass) [(A)/{(A)+(B)}] of from 0.6 to 1.0:

(B) a polyester poly(meth)acrylate monomer having three or more (meth)acryloyl groups per molecule.

EFFECTS OF THE INVENTION

According to the present invention, a transparent electroconductive laminate which does not cause cracking due to bending is provided. Furthermore, according to the present invention, a transparent touch panel, particularly a transparent touch panel of a resistive film system or a capacitance system, having such a transparent electroconductive laminate is provided.

More specifically, in the transparent electroconductive laminate of the present invention, a cured resin layer having specific properties and a transparent electroconductive layer are stacked on at least one surface of a transparent organic polymer substrate.

BRIEF DESCRIPTION OF THE DRAWINGS

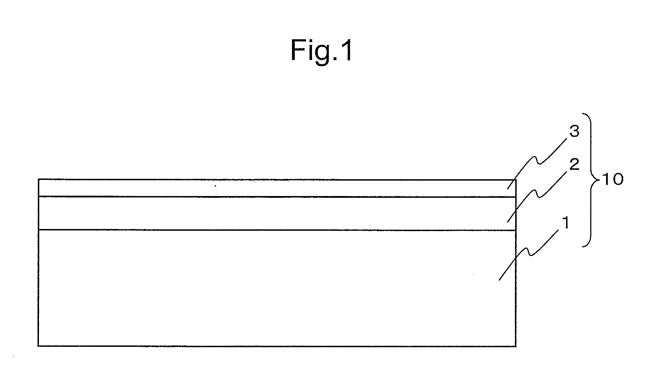

[Fig. 1] Fig. 1 is a view illustrating the transparent electroconductive laminate of the present invention.

MODE FOR CARRYING OUT THE INVENTION

An embodiment for carrying out the present invention is described below, but the present invention is not limited to the following descriptions.

In the transparent electroconductive laminate of the present invention, a cured resin layer and a transparent electroconductive layer are stacked on at least one surface of a transparent organic polymer substrate. That is, as shown in Fig. 1, e.g. in the transparent electroconductive laminate 10 of the present invention, a cured resin layer 2 and a transparent electroconductive layer 3 are stacked on at least one surface of a transparent organic polymer substrate 1.

<Transparent Organic Polymer Substrate>

The transparent organic polymer substrate used in the transparent electroconductive laminate of the present invention may be any transparent organic polymer substrate, particularly a transparent organic polymer substrate employed in the optical field, which is excellent in the heat resistance, transparency and the like.

The transparent organic polymer substrate for use in the transparent electroconductive laminate of the present invention includes a substrate made of a transparent polymer, e.g. a polycarbonate-based film; a polyester-based film such as polyethylene terephthalate and polyethylene naphthalate; a cellulose-based film such as diacetyl cellulose and triacetyl cellulose; and an acrylic film such as polymethyl methacrylate. The transparent organic polymer substrate for use in the transparent electroconductive laminate of the present invention also includes a substrate made of a transparent polymer, e.g. a styrene-based film such as polystyrene and acrylonitrile-styrene copolymer; an olefin-based film such as polyvinyl chloride, polyethylene, polypropylene, polyolefin having a cyclic or norbornene structure, and ethylene-propylene copolymer; and an amide-based film such as nylon and aromatic polyamide.

Furthermore, the transparent organic polymer substrate for use in the transparent electroconductive laminate of the present invention includes, e.g., a substrate made of a transparent polymer such as polyimide, polysulfone, polyethersulfone, polyether ether ketone, polyphenylene sulfide, polyvinyl alcohol, polyvinylidene chloride, polyvinyl butyral, polyarylate, polyoxymethylene, epoxy resin and a blend of polymers above. Among these transparent polymers, polycarbonate is preferred in view of transparency, heat resistance and the like.

In use for the transparent electroconductive laminate of the present invention, out of those transparent organic polymer substrates, a substrate having a low optical birefringence, the controlled phase difference of 1/4 of the wavelength (e.g. 550 nm) ($\lambda$/4) or to 1/2 of the wavelength ($\lambda$2), or an totally uncontrolled birefringence, may be appropriately selected according to the intended use. The case of appropriately selecting the substrate according to the intended use as referred to herein includes, e.g., a case where the transparent electroconductive laminate of the present invention is used together with a polarizing plate or a retardation film for use in a liquid crystal display, or with a display expressing its function through polarization such as linear polarization, elliptical polarization and circular polarization as in an inner-type touch panel.

The film thickness of the transparent polymer substrate can be appropriately determined, but in general, e.g. in view of strength and workability such as handleability, the film thickness is approximately from 10 to 500 $\mu$m, preferably from 20 to 300 $\mu$m, more preferably from 30 to 200 $\mu$m.

<Transparent Organic Polymer Substrate - Tensile Elongation at Break>

The transparent electroconductive laminate of the present invention has a cured resin layer having specific properties, and thereby exhibits good characteristics as a laminate, even when a transparent organic polymer substrate poor in the mechanical strength is used. Therefore, according to the present invention, even a substrate having a small tensile elongation at break, which is indicative of mechanical strength, can be used. For example, in the transparent electroconductive laminate of the present invention, a transparent organic polymer substrate having a tensile elongation at break of 50% or less, 30% or less, 20% or less, 10% or less, or 5% or less, can be used.

Incidentally, in the present invention, the tensile elongation at break can be determined under the following conditions by using an automatic film strength-elongation measuring instrument, "Tensilon RTC-1210A", manufactured by Orientec Co., Ltd.

Sample size: width of 10 mm and length of 140 mm Chuck-to-chuck distance: 100 mm
Tensile speed: 5 mm/min
Measurement environment: 25°C, relative humidity (RH) of 50%, and atmospheric pressure

The tensile elongation at break is determined according to the following formula:

```
(Tensile elongation at break (%)) = {(film length at
break) - (chuck-to-chuck distance)}/(chuck-to-chuck
distance) × 100
```

The measurement is performed 5 times in each of the longitudinal direction and the direction perpendicular thereto of the film, and the average value is calculated.

<Transparent Organic Polymer Substrate - Polycarbonate>

As described above, for the transparent organic polymer substrate in the present invention, a substrate made of a polycarbonate having high transparency and high heat resistance, particularly an aromatic polycarbonate, more particularly a bisphenol A-type aromatic polycarbonate, is preferably used.

Incidentally, biaxial stretching of film is essential for a film formed of a crystalline polyester such as polyethylene terephthalate (PET) so as to impart heat resistance or mechanical properties. Such biaxial stretching produces a molecular orientation in the film, and thereby generates a large birefringence. This large birefringence is sometimes undesirable, depending on the use.

On the other hand, an amorphous polymer such as polycarbonate can express high heat resistance without stretching the film, and accordingly, a birefringence-free substrate or a substrate having the controlled phase difference of $\lambda$/4, $\lambda$/2 or the like, can be easily fabricated using them.

Examples of the production method for a general optical film include a method of obtaining an optical film by a normal extrusion molding method (melting method), a solution casting method (casting method) or the like.

The melting method is a method of melting a resin with heating and shear heat generation of an extruder, and casting the melt from a casting die on a cooling roll to form a film. The melting method is generally advantageous in that the production rate is high and the film can be produced at a low cost, but it is difficult to form a film of a high-molecular-weight resin having a high viscosity.

The casting method is a method of dissolving a resin in a good solvent, casting the obtained solution from a casting die on a flat metal belt or the like, and removing and drying the solvent to form a film. In the casting method, the solution viscosity can be adjusted by the solution concentration, and thereby as compared with the melting method, a high-molecular-weight resin can be film-formed, but the drying step of removing the solvent is rate-controlling and the film-forming speed is generally low relative to the melting method.

The solvent used for forming a polycarbonate into a film by the casting method is not particularly limited, as long as it is a solvent capable of dissolving the polycarbonate. Specific examples of such a solvent include methylene chloride, chloroform, 1,2-dichloroethane, 1,1-dichloroethane, 1,1,2-trichloroethane, chlorobenzene, dichlorobenzene, tetrahydrofuran, toluene, and isophorone. From the standpoint that the boiling point is relatively low and drying of the film is easy, methylene chloride and chloroform are preferred.

The polycarbonate film may be obtained by using either of a melting method and a solution method. However, considering the cost or productivity, the polycarbonate film is preferably obtained by using a melting method. In the case of obtaining the polycarbonate film by using a melting method, it is difficult to increase the molecular weight of the polycarbonate above a certain level, and thereby, cracking of the transparent electroconductive laminate may be of concern due to reduction in the mechanical properties of the substrate. However, according to the present invention, the polycarbonate film is used in combination with a cured resin layer having specific properties, whereby the cracking resistance as a laminate can be improved.

<Transparent Organic Polymer Substrate - Polycarbonate - Weight Average Molecular Weight>

In the case of obtaining the polycarbonate film by using a melting method, the weight average molecular weight is preferably 20,000 or less, more preferably 19,000 or less. If the weight average molecular weight is too large, the resin temperature for obtaining a melt viscosity allowing for film formation becomes high, as a result, heat deterioration is likely to occur and in turn, the film appearance may be impaired.

In the present invention, the weight average molecular weight (Mw) of the polycarbonate can be determined by dissolving 40 mg of a dried sample in 5 ml of chloroform, and introducing 200 $\mu$l of the obtained solution into a GPC (gel permeation chromatography) apparatus under the following conditions.

Apparatus: GPC System (LC-10A) manufactured by Shimadzu Corporation
Detector: RID-10A
Column: Shodex KF-801 + KF-802 + KF805L
Standard substance: TSK Standard Polystyrene
Eluent: chloroform, 40°C, 1 ml/min

<Cured Resin Layer>

In the transparent electroconductive laminate of the present invention, a cued resin layer is stacked on at least one surface of a transparent organic polymer substrate.

The resin composition constituting the cured resin layer has a recovery ratio ($\eta_{IT}$) represented by the following formula of 55% or less, 50% or less, or 45% or less, with respect to a 5 $\mu$m-thick cured resin layer and an indentation hardness test in accordance with ISO14577-1:2002 (test load: 1 mN):

$$\eta_{IT} = W_{elast}/W_{total} \times 100 \ (\%)$$

(wherein $W_{elast}$: an indentation work (Nm) due to elastic return deformation, and
$W_{total}$: a mechanical indentation work (Nm)).

In the case where the recovery ratio is large, when the laminate is bent, the strain energy accumulated in the cured resin layer due to deformation of the cured resin layer is large. Accordingly, if the recovery ratio is too large, the cured resin layer cannot withstand the strain energy and cracks, and when the cured resin layer is cracked, an impact attributable to the accumulated strain energy is considered to induce cracking of the adjacent substrate and/or transparent electroconductive layer. On the other hand, in the case where the recovery ratio is sufficiently small, even when the laminate is bent, due to the small strain energy, the cured resin layer is less likely to crack, and even when the cured resin layer is cracked, the impact by cracking of the cured resin layer is small, as a result, the cracking is considered not to propagate to the adjacent substrate and/or transparent electroconductive layer.

The recovery ratio ($\eta_{IT}$) is preferably 30% or more, 35% or more, 40% or more, or 41% or more.

If the recovery ratio is too small, the cured resin layer is plastically deformed at the time of bending the laminate, and when the laminate is returned from its bent state, waving deformation is generated in the cured resin layer portion, which may bring about a change, e.g., in the resistance value of the transparent electroconductive layer.

The resin composition constituting the cured resin layer preferably has an indentation modulus of 3,000 $N/mm^2$ or more, 3,500 $N/mm^2$ or more, 4,000 $N/mm^2$ or more, 4,500 $N/mm^2$ or more, or 5,000 $N/mm^2$ or more, with respect to a 5 $\mu$m-thick cured resin layer and an indentation hardness test in accordance with ISO14577-1:2002 (test load: 1 mN).

The sufficiently large indentation modulus, i.e. the cured resin layer having a sufficient surface hardness is preferred for the protection of the surface of the transparent organic polymer substrate.

Incidentally, as described above, the indentation hardness test was performed in accordance with ISO14577 Part 1: 2002 under the following conditions, and the average of ten measurements was determined.

Measurement apparatus: hardness measurement by a microhardness meter, ENT-2100, manufactured by Elionix, Inc.

Test method: load setting test
Test load: 1 mN
Test load loading and unloading times: 10 seconds
Test load holding time: 5 seconds

Also, the indentation modulus is a gradient of a tangential line of an unloading curve at the maximum test force ($F_{max}$), and after approximating the section from the initiation of unloading to 50% of the unloading curve by a quadratic curve, the indentation modulus is calculated from the gradient of a tangential line at $F_{max}$ on the quadratic curve.

<Scratch Hardness>

In the present invention, the scratch hardness of the cured resin layer evaluated by a pencil method is preferably H or more. If the scratch hardness is less than H (F or less), the laminate surface may be readily scratched, or the writing durability as a touch panel substrate may be disadvantageously poor.

Incidentally, in the present invention, the scratch resistance is evaluated in accordance with JIS K5600-5-4, General Test Method for Coating Material - Part 5: Mechanical Property of Coating Film - Section 4: Scratch Hardness (Pencil Method).

<Cured Resin Layer - Thickness>

The thickness of the cured resin layer may be from 1 to 10 $\mu$m, from 1 to 5 $\mu$m, from 1 to 4 $\mu$m, or from 1 to 3 $\mu$m.

<Cured Resin Layer - Composition>

The cured resin layer for use in the present invention is not particularly limited, as long as the purposes and effects of the present invention are not impaired. The cured resin layer includes, e.g., a thermosetting resin composition such as epoxy-based resin, and an active energy ray-curable resin composition such as ultraviolet ray-curable acrylic resin. Also, the cured resin layer includes a thermosetting silicon-containing vinyl alcohol-based resin composition, which is obtained by mixing a vinyl alcohol-based polymer and a silicon-containing compound such as epoxy group-containing silicon compound and amino group-containing silicon compound, and heating the obtained mixture to cause a crosslinking reaction.

Among others, as the cured resin layer, use of an active energy ray-curable resin composition is preferred in view of transparency, hardness, abrasion resistance, durability and productivity.

<Cured Resin Layer - Composition - Specific Composition>

More specifically, the resin composition constituting the cured resin layer is preferably an active energy ray-curable resin composition containing the following component (A):

(A) a polyurethane poly(meth)acrylate oligomer, obtained by reacting the following (a1) to (a3) and having the weight average molecular weight (GPC measurement, in terms of polystyrene) of from 2,500 to 5,000:

(a1) a linear diol having a carbon number of 1 to 5 (hereinafter, sometimes referred to as component (a1)),
(a2) an alicyclic diisocyanate (a2) (hereinafter, sometimes referred to as component (a2)), and
(a3) a monohydroxy poly(meth)acrylate (a3) (hereinafter, sometimes referred to as component (a3)).

Also, the resin composition constituting the cured resin layer is preferably an active energy ray-curable resin composition containing the component (A) and the  following component (B), with the blending ratio (by mass) [(A)/{(A)+(B)}] of from 0.6 to 1.0:

(B) a polyester poly(meth)acrylate monomer having three or more (meth)acryloyl groups per molecule.

<Cured Resin Layer - Composition - Specific Composition - Component (a1)>

By using the component (a1), the urethane bond in the reaction product above can be made dense, and in turn, a cured resin layer satisfying both the surface hardness and the flexibility can be formed. As the component (a1), various known compounds can be used without any particular limitation, as long as it is a linear diol compound having a carbon number of 1 to 5. Specific examples thereof include methanediol, ethylene glycol, 1,3-propanediol, 1,4-butanediol, and 1,5-pentanediol. One of these may be used alone, or two or more thereof may be combined. Among these, from the standpoint of satisfying both the surface hardness and the flexibility of the cured film, ethylene glycol is preferred.
Incidentally, a cured resin layer satisfying both the surface hardness and the flexibility cannot be formed from an oligomer obtained using, instead of the component (a1), a branched diol compound or a diol compound having a carbon number of 6 or more.

<Cured Resin Layer - Composition - Specific Composition - Component (a2)>

As the component (a2), various known compounds can be used without any particular limitation, as long as it is a diisocyanate having an alicyclic structure. Specific examples thereof include cyclohexane-1,4-diisocyanate, isophorone diisocyanate, and dicyclohexylmethane-4,4'-diisocyanate. One of these may be used alone, or two or more thereof may be used in  combination. Among these, from the standpoint of satisfying both the surface hardness and the flexibility of the cured film, isophorone diisocyanate is preferred.
Incidentally, a cured resin layer satisfying both the surface hardness and the flexibility cannot be formed from an oligomer obtained using, instead of the component (a2), an aliphatic diisocyanate. Also, in the case of an oligomer obtained using an aromatic diisocyanate in place of the component (a2), the weather resistance of the cured film tends to be deteriorated.

<Cured Resin Layer - Composition - Specific Composition - Component (a3)>

As the component (a3), various known compounds can be used without any particular limitation, as long as it is a compound having two or more (meth)acryloyl groups and one hydroxyl group per molecule.
Specific examples of the component (a3) include glycerol di(meth)acrylate, pentaerythritol monohydroxytri (meth)acrylate, and dipentaerythritol monohydroxypenta(meth)acrylate. One of these may be used alone, or two or more thereof may be used in combination.
Among the components (a3), from the standpoint of satisfying both the surface hardness and the flexibility of the cured film, a monohydroxy compound having three acryloyl groups per molecule, specifically a pentaerythritol tri (meth)acrylate, is preferred.

<Cured Resin Layer - Composition - Specific Composition - Component (A)>

The component (A) contains a reaction product of the components (a1), (a2) and (a3), and the reaction product can be produced by various known methods.
Specifically, the method for reacting these components (a1) to (a3) includes, e.g., a one-shot method of reacting the components (a1) to (a3) at a time, and a prepolymer method of once reacting the components (a1) and (a2) to obtain a urethane prepolymer and reacting the component (a3) with the urethane prepolymer. From the standpoint of easily controlling the structure of the component (A), a prepolymer method is preferred.
In the case of using a prepolymer method, the reaction ratio of the component (a1) to the component (a2) is usually in the range where the ratio (NCO/OH) between the molar number of isocyanate group (NCO) of the component (a2) and the molar number of hydroxyl group (OH) of the component (a1) is from 2:1 to 5:4, preferably 3/2. Also, the reaction ratio of the urethane prepolymer obtained by reacting the component (a1) and the component (a2) to the component (a3) is usually in the range where the ratio between the molar number of terminal isocyanate group (NCO')

8

of the urethane prepolymer and the molar number of hydroxyl group (OH') of the component (a3) is from 1/1 to 1/1.5, preferably from 1/1 to 1/1.3. The reaction temperature of these urethane reactions is usually on the order of 50 to 150°C.

In the urethanization reaction, various known catalysts and solvents can be used. The catalyst includes, e.g., triethyldiamine, 1,8-diazabicyclo-[5,4,0]-undecene-7, stannous octylate, and lead dioctylate. The solvent includes a solvent that is less likely to react with an isocyanate group during the urethanization reaction, such as methyl ethyl ketone, methyl isobutyl ketone and toluene.

The thus-obtained component (A) may have a weight average molecular weight of approximately from 2,500 to 5,000, preferably from 2,500 to 4,000. If the weight average molecular weight is too small, the cured film tends to lack in the flexibility, whereas if the weight average molecular weight is too large, the reaction system is sometimes gelled, making the synthesis difficult.

<Cured Resin Layer - Composition - Specific Composition - Component (B)>

As the component (B), various known compounds can be used without any particular limitation, as long as it is a polyester poly(meth)acrylate monomer having three or more (meth)acryloyl groups per molecule.

Examples of the component (B) include tri(meth)acrylates such as trimethylolpropane tri(meth)acrylate and pentaerythritol monohydroxytri(meth)acrylate; tetra(meth)acrylates such as pentaerythritol tetra(meth)acrylate and ditrimethylolpropane tetra(meth)acrylate; and penta(meth)acrylates such as dipentaerythritol (monohydroxy)penta(meth) acrylate. In addition, a hexafunctional or higher functional polyester poly(meth)acrylate may be also used. One of these polyester poly(meth)acrylates may be used alone, or two or more thereof may be mixed and used at the same time.

<Cured Resin Layer - Others>

In the composition constituting the cured resin layer, one kind or two or more kinds of third components such as photopolymerization initiator, surface conditioner, organic solvent, antioxidant, ultraviolet ray absorber, light stabilizer, pigment and fine or ultrafine particle made of a metal oxide or an acryl component, may be added and used.

The cured resin layer may be made of an active energy ray (e.g., ultraviolet ray, electron beam)-curable resin composition.

The source of an ultraviolet ray as an active energy ray includes, e.g., a high-pressure mercury lamp and a metal halide lamp, and usually the irradiation energy thereof is approximately from 100 to 2,000 mJ/cm$^2$. The source and irradiation method of an electron beam as an active energy ray (e.g., scanning-type electron beam irradiation, curtain-type electron beam irradiation) are not particularly limited, and usually, the irradiation energy thereof is approximately from 10 to 200 kGy.

In the case of performing ultraviolet ray curing, a photopolymerization initiator is used by adding it to the composition constituting the cured resin layer. The photopolymerization initiator is not particularly limited, as long as it can decompose upon irradiation with an ultraviolet ray to generate a radical, and thereby initiate the polymerization.

The photopolymerization initiator includes, e.g., a benzophenone-based polymerization initiator (such as benzophenone, benzoylbenzoic acid, o-benzoylbenzoic acid methyl ester, p-dimethylaminobenzoic acid ester, methyl benzoylbenzoate, phenylbenzophenone, trimethylbenzophenone and hydroxybenzophenone); an acetophenone-based polymerization initiator (such as phenoxydichloroacetophenone, butyldichloroacetophenone, diethoxyacetophenone, hydroxymethylphenylpropanone, hydroxycyclohexyl phenyl ketone and hydroxycyclohexyl phenyl ketone); and a thioxanthone-based polymerization initiator (such as thioxanthone, chlorothioxanthone, methylthioxanthone, isopropylthioxanthone, dichlorothioxanthone, diethylthioxanthone and diisopropylthioxanthone). One of these may be used alone, or two or more thereof may be used in combination.

The amount of the photopolymerization initiator used is not particularly limited, but is usually about 1 to 10 parts by weight, preferably about 1 to 5 parts by weight, per 100 part by weight of the total solid content.

The surface regulator is not particularly limited and can be used, as long as it does not impair the purposes and effects of the present invention. The surface regulator includes, e.g., a leveling agent for obtaining smoothness of the cured film surface, and a wettability improver for improving the wettability with the coated substrate.

The organic solvent is not particularly limited and includes, e.g., monoalcohols such as methanol, ethanol, n-propanol, isopropyl alcohol and n-butanol; glycol ethers such as ethylene glycol monoethyl ether and propylene glycol monomethyl ether; ketones such as methyl ethyl ketone, methyl isobutyl ketone and cyclohexanone; acetic acid esters such as ethyl acetate and butyl acetate; aromatics such as toluene and xylene; acetylacetone; and diacetone alcohol. One of these may be used, or two or more thereof may be mixed and used.

The method for coating the resin composition is not particularly limited, and a known method may be employed. Specific examples thereof include a gravure roll coating method, a reverse roll coating method, a die coating method, a lip coating, a blade coating method, a knife coating method, a curtain coating method, a slot orifice method, a spray coating method, and an inkjet method.

<Transparent Electroconductive Layer>

In the transparent electroconductive laminate of the present invention, a transparent electroconductive layer is stacked on at least one surface of a transparent organic polymer substrate.

In the present invention, the transparent electroconductive layer is not particularly limited. The transparent electroconductive layer includes, e.g., a metal layer and a metal compound layer. As for the component constituting the transparent electroconductive layer, the layer includes, e.g., a layer made of a metal oxide such as silicon oxide, aluminum oxide, titanium oxide, magnesium oxide, zinc oxide, indium oxide and tin oxide. Among these, a crystalline layer mainly made of indium oxide is preferred, and a layer made of crystalline ITO (Indium Tin Oxide) is more preferably used.

In the case where the transparent electroconductive layer is crystalline, the upper limit of the crystal grain size need not be particularly specified, but is preferably 500 nm or less. If the crystal grain size exceeds 500 nm, the writing durability is deteriorated and this is not preferred. The crystal grain size as used herein is defined as a maximum size among diagonal lines or diameters in each of polygonal or oval regions observed under a transmission electron microscope (TEM).

In the case where the transparent electroconductive layer is not a crystalline film, the sliding durability (or writing durability) or environmental reliability required for a touch panel may be deteriorated.

The transparent electroconductive layer can be formed by a known method, and, e.g., a physical formation method (Physical Vapor Deposition (hereinafter, referred to as "PVD")), such as DC magnetron sputtering method, RF magnetron sputtering method, ion plating method, vacuum deposition method and pulsed laser deposition method, may be used. In view of the industrial productivity of forming a metal compound layer having a uniform film thickness for a large area, a DC magnetron sputtering method is preferred. Incidentally, other than the above-described physical vapor deposition method (PVD), a chemical formation method such as Chemical Vapor Deposition method (hereinafter, referred to as "CVD") and sol-gel method may be also used, but in view of film thickness control, a sputtering method is still preferred.

The film thickness of the transparent electroconductive layer is, in view of transparency and electroconductivity, preferably from 5 to 50 nm, more preferably from 5 to 30 nm. If the film thickness of the transparent electroconductive layer is less than 5 nm, the aging stability of the resistance value tends to be inferior, whereas if the film thickness exceeds 50 nm, the surface resistance value is reduced and this is not preferred as a touch panel.

In the case of using the transparent electroconductive laminate of the present invention for a touch panel, in view of power consumption saving, necessity regarding circuit processing, and the like of a touch panel, it is preferred to use a transparent electroconductive layer having the surface resistance value of from 80 to 2,000 $\Omega$/sq, more preferably from 100 to 1,000 $\Omega$/sq, with a film thickness of 10 to 30 nm.

Incidentally, as the transparent electroconductive layer, a transparent electroconductive layer, which is formed by a wet process (such as spin coating, gravure, slot die and printing) of applying a liquid dispersion having dispersed therein a metal nanowire, a carbon nanotube, an electroconductive oxide fine particle or the like on a polymer substrate, may be preferably used.

<Metal Compound Layer>

The transparent electroconductive laminate of the present invention may further have, between the cured resin layer and the transparent electroconductive layer, an optical interference layer and a metal compound layer, the optical interference layer being made of a resin component and a metal oxide and/or metal fluoride ultrafine particle, and the metal compound layer being particularly a metal compound layer having a film thickness of 0.5 nm to less than 5.0 nm.

A transparent organic polymer substrate, an optical interference layer, a metal compound layer having a controlled film thickness, and a transparent electroconductive layer are sequentially stacked, whereby the adherence between respective layers is greatly improved. Furthermore, by using the same metal as the metal of the metal oxide ultrafine particle and/or metal fluoride ultrafine particle in the optical interference layer, and as the metal in the metal compound layer, the adherence between the optical interference layer and the transparent electroconductive layer is more improved.

In a transparent touch panel using the transparent electroconductive laminate having such a metal compound layer, the writing durability required for a transparent touch panel is enhanced as compared with that not having a metal compound layer. If the film thickness of the metal compound layer is too large, the metal compound layer starts exhibiting mechanical properties as a continuous body, and in turn, the edge-pressing durability required for a transparent touch panel cannot be enhanced. On the other hand, if the film thickness of the metal compound layer is too small, control of the film thickness is difficult and, in addition, adequate adherence between the optical interference layer having an uneven surface and the transparent electroconductive layer can be hardly developed, as a result, the writing durability required for a transparent touch panel is not sufficiently improved.

As for the component constituting the metal compound layer, the layer includes, e.g., a layer made of a metal oxide such as silicon oxide, aluminum oxide, titanium oxide, magnesium oxide, zinc oxide, indium oxide and tin oxide.

In particular, it is preferred that the same element is contained in the resin component and ultrafine particle of the optical interference layer.

The metal compound layer can be formed by a known technique and, e.g., a physical vapor deposition method (PVD) such as DC magnetron sputtering method, RF magnetron sputtering method, ion plating method, vacuum deposition method and pulsed laser deposition method may be used. In view of the industrial productivity of forming a metal compound layer having a uniform thickness for a large area, a DC magnetron sputtering method is preferred. Incidentally, other than the above-described physical vapor deposition (PVD) method, a chemical formation method such as chemical vapor deposition (CVD) method and sol-gel method may be used, but in view of film thickness control, a sputtering method is still preferred.

The target used for sputtering is preferably a metal target, and a reactive sputtering method is widely employed. This is because the oxide of an element used as the metal compound layer is mostly an insulator, and therefore, a DC magnetron sputtering method is often inapplicable in the case of a metal compound target. Also, in recent years, a power source capable of causing two cathodes to simultaneously discharge and thereby suppressing formation of an insulator on the target has been developed, and this makes it possible to apply a pseudo RF magnetron sputtering method.

<Transparent Electroconductive Laminate - Stacking Order>

In the transparent electroconductive laminate of the present invention, the transparent organic polymer substrate (α), the cured resin layer (β) and the transparent electroconductive layer (γ) may be stacked in any one order of α/β/γ, α/γ/β and α/β/γ/β.

<Transparent Electroconductive Laminate - Bending Durability>

The transparent electroconductive laminate of the present invention is excellent in the bending durability due to the cured resin layer having specific properties. That is, the transparent electroconductive laminate of the present invention can suppress, when bending the laminate, a large change in the resistance value of the transparent electroconductive layer and breakage of the laminate.

<Transparent Electroconductive Laminate - Functional Layer>

In the transparent electroconductive laminate of the present invention, various functional layers such as gas barrier layer, antireflection layer and reflection film can be stacked to provide functions required depending on the usage.

In the transparent electroconductive laminate of the present invention, a gas barrier layer capable of preventing permeation of a sole gas or a plurality of gases such as oxygen and water vapor can be further stacked for the purpose of imparting a gas barrier property, as long as the characteristics are not impaired. Such a functional layer can be formed in a single-layer or multilayer configuration on the transparent organic polymer substrate, on the cured resin layer and/or on the transparent electroconductive layer.

For example, in the case of forming a gas barrier layer by a wet coating method, a polyvinyl alcohol-based polymer such as polyvinyl alcohol and polyvinyl alcohol/ethylene copolymer, a polyacrylonitrile-based polymer such as polyacrylonitrile and polyacrylonitrile/styrene copolymer, or a known coating material such as polyvinylidene chloride can be used as the barrier material.

The coating method is not particularly limited, and a known method such as reverse roll coating method, gravure roll coating method and die coating method can be used. Also, when the adhesiveness, wettability or the like to the substrate or substrate surface is bad, an adhesiveness-promoting treatment such as primer treatment can be appropriately performed.

In the case of forming a gas barrier layer by a dry process such as sputtering or vacuum deposition, a thin film of an oxide, nitride or oxynitride of at least one metal or a mixture of two or more metals selected from known barrier materials such as Si, Al, Ti, Mg and Zr can be formed by a known method.

The film thickness of the gas barrier layer may be set to a thickness capable of developing the intended performance. Incidentally, two or more layers such as dry/wet layers, dry/dry layers, and wet/wet layers may be stacked in appropriate combination.

<Use>

The transparent electroconductive laminate of the present invention can be used as a transparent electrode substrate in a transparent touch panel. Particularly, in a resistive film-type transparent touch panel having a configuration where two transparent electrode substrates each having on at least one surface thereof a transparent electroconductive layer are disposed by arranging respective transparent electroconductive layers to face each other, the transparent electroconductive laminate of the present invention can be used as the transparent electrode substrate for a movable and/or fixed electrode substrate. Also, in a capacitance-type transparent touch panel comprising a protective transparent substrate having an observation-side surface and a display device-side surface and 1, 2 or more position detecting electrode layers disposed on the display device-side surface of the protective transparent substrate, the transparent electroconductive laminate of the present invention can be used as a transparent electroconductive laminate having such a position detecting electrode layer.

EXAMPLES

The present invention is described in greater detail below by referring to examples, but the present invention is not limited to these examples. In examples, unless otherwise indicated, the "parts" and "%" are on the mass basis. Also, various measurements in the examples were performed as follows.

<Tensile Elongation at Break of Film>

The tensile elongation at break of the film was measured as described above.

<Weight Average Molecular Weight (Mw)>

The weight average molecular weight (Mw) of the film was measured as described above.

<Indentation Hardness Test>

Measurement in the indentation hardness test was performed as described above.

<Steel Wool Scratching Property>

Using Tribogear Type-30 manufactured by Shinto Kagaku, a steel wool was moved back and force 10 times at 5 cm/sec on the transparent electroconductive film under a load of 50 g, and the number of scratches produced on the film surface was observed. The rating was A when the number of scratches produced on the surface was 10 or less, B when from 11 to 20, and C when 21 or more.

<Bending Durability>

A transparent electroconductive laminate specimen of 14 cmx4 cm was wound around a stainless steel bar having a diameter of 6 mm such that the short side of the specimen ran in parallel to the stainless steel bar and the electroconductive surface came outside, the both ends were clipped, and a weight of 500 g was hang from both ends and kept for 30 seconds.

(Cracking of Substrate)

After the test above, cracking of the substrate was observed, and the rating was A when cracking was not generated in the substrate, and C when cracking was generated in the substrate.

(Percentage Change of Resistance)

The resistance value within 10 cm in the center part of the specimen was measured before and after the test, and the percentage change was determined. The rating was A when the percentage change was less than 30%, B when from 30% to less than 60%, and C when 60% or more.

<Writing (Sliding) Durability Test>

The transparent electroconductive laminate produced was used as the fixed electrode of a touch panel, and a writing durability test was performed by linearly moving a polyacetal-made pen with a tip of 0.8 R back and force 500,000 times under a load of 450 g from the movable electrode side at 210 mm/sec. The pen was replaced with a new pen every 100,000 times. The maximum number of writing/reciprocating movements, where the amount of change in linearity of the transparent touch panel between before and after the writing durability test was kept less than 1.5%, was recorded.

<Writing (Sliding) Durability Test - Linearity>

A direct voltage of 5 V was applied between parallel electrodes of a movable electrode substrate or a fixed electrode substrate, and the voltage was measured at 5-mm intervals in the direction perpendicular to the parallel electrodes. Assuming that the voltage at the measurement start position A is EA, the voltage at the measurement end position B is EB, the measured voltage value at the distance X from A is EX, and the theoretical value is ET, the linearity L is represented as follows:

$$ET=(EB-EA)\times X/(B-A)+EA$$

$$L(\%)=(|ET-EX|)/(EB-EA)\times100$$

<Coating Solution P1>

To a reaction vessel equipped with a stirring device, a condenser tube, a dropping funnel and a nitrogen inlet tube, 196 parts of isophorone diisocyanate (hereinafter, referred to as "IPDI") (component (a2)), 0.05 parts of tin octylate and 214 parts of methyl isobutyl ketone (hereinafter, referred to as "MIBK") were charged. Thereafter, the temperature in the system was raised to about 100°C over about 1 hour. At the same temperature, 36 parts of ethylene glycol (hereinafter, referred to as "EG") (component (a1)) was added dropwise from a different dropping funnel over about 1 hour. After keeping the same temperature for 2 hours, the temperature in the system was lowered to 70°C.
Subsequently, the nitrogen inlet tube was replaced with an air inlet tube, and 268 parts of pentaerythritol triacrylate (hereinafter, referred to as "PETA") (component (a3)), 0.05 parts of methoquinone and 0.1 parts of tin octylate were charged into the reaction vessel and mixed. Thereafter, the temperature in the system was raised to about 90°C under air bubbling, and the reaction system was held at the same temperature for 3 hours, and then cooled to obtain Active Energy Ray-Curable Oligomer (A1) (hereinafter, referred to as Component (A1)).
The weight average molecular weight of Component (A1) was 3,600. This weight average molecular weight is the value measured by a commercially available gel permeation chromatography apparatus ("HLC-8220", trade name, manufactured by Tosoh Corporation) using commercially available columns ("SuperG100H" and "SuperG200H", trade names, manufactured by Tosoh Corporation) (hereinafter the same).
In 714 parts of Component (A1) obtained above, 49 parts of MIBK, 262 parts of isopropyl alcohol (hereinafter, referred to as "IPA") and 25 parts of 1-hydroxy-cyclohexyl-phenyl ketone (Iragacure 184, trade name, produced by Ciba Japan; hereinafter referred to as "Irg184") as a photopolymerization initiator were blended and dissolved to obtain Coating Solution P1 having a solid content concentration of 50%.

<Coating Solution P2>

To the same reaction vessel as that for Coating Solution P1, 156 parts of IPDI (component (a2)), 0.05 parts of tin octylate and 125 parts of MIBK were charged. Thereafter, the temperature in the system was raised to about 100°C over about 1 hour. At the same temperature, 22 parts of EG (component (a1)) was added dropwise from a different dropping funnel over about 1 hour. After keeping the same temperature for 2 hours, the temperature in the system was lowered to 70°C.
Subsequently, the nitrogen inlet tube was replaced with an air inlet tube, and 322 parts of PETA (component (a3)), 0.5 parts of methoquinone and 0.05 parts of tin octylate were charged into the reaction vessel and mixed. Thereafter, the temperature in the system was raised to about 90°C under air bubbling, and the reaction system was held at the same temperature for 3 hours and then cooled to obtain a solution of Active Energy Ray-Curable Oligomer (A2) (hereinafter, referred to as Component (A2)).
The weight average molecular weight of Component (A2) was 2,600. In 625 parts of the (A2) solution obtained, 138 parts of MIBK, 262 parts of IPA and 25 parts of Irg184 as a photopolymerization initiator were blended and dissolved to obtain Coating Solution P2 having a solid content concentration of 50%.

<Coating Solution P3>

In 464 parts of a solution of Component (A1) (where an acrylate oligomer component accounted for 325 parts) obtained by the production process of Coating Solution P1, 175 parts of PETA (component (B)), 124 parts of MIBK, 262 parts of IPA and 25 parts of Irg184 as a photopolymerization initiator were blended and dissolved to obtain Coating Solution P3 having a solid content concentration of 50%.

In Coating Solution P3 obtained, the ratio "(A)/{(A)+(B)}" was 0.65.

<Coating Solution P4>

In 464 parts (where an acrylate oligomer component accounted for 325 parts) of a solution of Component (A1) obtained by the production process of Coating Solution P1, 175 parts of trimethylolpropane triacrylate (hereinafter, referred to as "TMPTA") (component (B)), 124 parts of MIBK, 262 parts of IPA and 25 parts of Irg184 as a photopolymerization initiator were blended and dissolved to obtain Coating Solution P4 having a solid content concentration of 50%.

In Coating Solution P4 obtained, the ratio "(A)/{(A)+(B)}" was 0.65.

<Coating Solution P5>

In the same reaction vessel as that for Coating Solution P1, 244 parts of IPDI (component (a2)), 0.05 parts of tin octylate and 214 parts of MIBK were charged. Thereafter, the temperature in the system was raised to about 100°C over about 1 hour. At the same temperature, 55 parts of EG (component (a1)) was added dropwise from a different dropping funnel over about 1 hour. After keeping the same temperature for 2 hours, the temperature in the system was lowered to 70°C.

Subsequently, the nitrogen inlet tube was replaced with an air inlet tube, and 201 parts of PETA (component (a3)), 0.5 parts of methoquinone and 0.05 parts of tin octylate were charged into the reaction vessel and mixed. Thereafter, the temperature in the system was raised to about 90°C under air bubbling, and the reaction system was held at the same temperature for 3 hours and then cooled to obtain a solution of Active Energy Ray-Curable Oligomer (A5) (hereinafter, referred to as Component (A5)). The weight average molecular weight of Component (A5) was 4,900.

In 714 parts of the (A5) solution obtained, 49 parts of MIBK, 262 parts of IPA and 25 parts of Irg184 as a photopolymerization initiator were blended and dissolved to obtain Coating Solution P5 having a solid content concentration of 50%.

<Coating Solution P6>

In the same reaction vessel as Example 1, 371 parts of IPDI (component (a2)), 0.05 parts of tin octylate and 125 parts of MIBK were charged. Thereafter, the temperature in the system was raised to about 100°C over about 1 hour. At the same temperature, 9 parts of EG (component (a1)) was added dropwise from a different dropping funnel over about 1 hour. After keeping the same temperature for 2 hours, the temperature in the system was lowered to 70°C.

Subsequently, the nitrogen inlet tube was replaced with an air inlet tube, and 371 parts of PETA (component (a3)), 0.5 parts of methoquinone and 0.05 parts of tin octylate were charged into the reaction vessel and mixed. Thereafter, the temperature in the system was raised to about 90°C under air bubbling, and the reaction system was held at the same temperature for 3 hours and then cooled to obtain a solution of Active Energy Ray-Curable Oligomer (A6) (hereinafter, referred to as Component (A6)). The weight average molecular weight of Component (A6) was 2,000.

In 625 parts of Component (A6) obtained, 138 parts of MIBK, 262 parts of IPA and 25 parts of Irg184 as a photopolymerization initiator were blended and dissolved to obtain Coating Solution P6 having a solid content concentration of 50%.

<Coating Solution P7>

The coating solution was produced by dissolving 4.5 parts by weight of a saturated double bond-containing acrylic copolymer as a first component constituting the cured resin layer, 100 parts by weight of PETA as a second component and 7 parts by weight of Irg184 as a photopolymerization initiator in an isobutyl alcohol solvent to have a solid content of 30 wt%.

Incidentally, the unsaturated double bond-containing acrylic copolymer as a first component was prepared as follows.

171.6 g of isoboronyl methacrylate, 2.6 g of methyl methacrylate and 9.2 g of methacrylic acid were mixed, and the obtained mixed solution was added dropwise to 330.0 g of propylene glycol monomethyl ether heated at 110°C, simultaneously with 80.0 g of a propylene glycol monomethyl ether solution containing 1.8 g of tert-butylperoxy-2-ethylhexanoate, over 3 hours at the same rate. The obtained mixture was reacted at 110°C for 30 minutes to obtain a reaction mixture. The dropwise addition and mixing above were performed in a 1,000-ml reaction vessel equipped with a stirring blade, a nitrogen inlet tube, a condenser tube and a dropping funnel, under a nitrogen atmosphere.

Thereafter, to the reaction mixture above, 17.0 g of a propylene glycol monomethyl ether solution containing 0.2 g of tert-butylperoxy-2-ethylhexanoate was added dropwise, and 5.0 g of a propylene glycol monomethyl ether solution containing 1.4 g of tetrabutylammonium bromide and 0.1 g of hydroquinone was successively added. Furthermore, a solution containing 22.4 g of 4-hydroxybutyl acrylate glycidyl ether and 5.0 g of propylene glycol monomethyl ether was added dropwise over 2 hours under air bubbling, and the reaction was then allowed to further proceed over 5 hours, whereby an unsaturated double bond-containing acrylic copolymer as the first component was obtained.

<Coating Solution P8>

100 Parts by weight of dipentaerythritol polyacrylate as a curable resin component and 5 parts by weight of Irg184 were dissolved in MIBK to produce Coating Solution C.
100 Parts by weight of OT-1000 produced by Toagosei Co., Ltd. as a urethane acrylate and 5 parts by weight of Irg184 were dissolved in MIBK to produce Coating Solution D.
Coating Solution P8 was produced by mixing these coating solutions such that contain 200 parts by weight of the curable resin component of Coating Solution D was contained per 100 parts by weight of the curable resin component of Coating Solution C.

[Example 1]

On one surface of a 100 $\mu$m-thick polycarbonate (PC) film prepared by a melting method ("PANLIGHT Film" D100, produced by Teijin Chemicals, Ltd., weight average molecular weight: 18,500, tensile elongation at break: 5%), Coating Solution P1 was coated by a bar coating method, irradiated with an ultraviolet ray and thereby cured to form a cured resin layer having a thickness of 3 $\mu$m. Separately from this, for an indentation hardness test, a sample of a cured resin layer having a thickness of 5 $\mu$m was prepared by the same method.
Furthermore, an ITO layer was formed on the cured resin layer by a sputtering method using an indium oxide-tin oxide target having a composition of indium oxide and tin oxide in a weight ratio of 95:5 and having a filling density of 98% to produce a transparent electroconductive laminate used as a movable electrode substrate. The film thickness of the ITO layer formed was about 20 nm, and the surface resistance value after film formation was about 350 $\Omega$/sq.
The produced movable electrode substrate was heat-treated at 150°C for 90 minutes to crystallize the ITO film. The surface resistance value after the heat treatment was about 280 $\Omega$/sq.
Evaluation results of this transparent electroconductive laminate are shown in Table 1.

[Example 2]

A cured resin layer was formed in the same manner as Example 1 except for changing the thickness of the cured resin layer to 8 $\mu$m.
Furthermore, an ITO layer was formed in the same manner as Example 1. The film thickness of the ITO layer formed was about 20 nm, and the surface resistance value after film formation was about 350 $\Omega$/sq. Also, the surface resistance value after heat treatment was about 280 $\Omega$/sq.
Evaluation results of this transparent electroconductive laminate are shown in Table 1.

[Example 3]

On one surface of the same melting-method polycarbonate (PC) film as Example 1, Coating Solution P2 was coated by a bar coating method, irradiated with an ultraviolet ray and thereby cured to form a cured resin layer having a thickness of 3 $\mu$m. Separately from this, for an indentation hardness test, a sample of a cured resin layer having a thickness of 5 $\mu$m was prepared by the same method.
Furthermore, an ITO layer was formed in the same manner as Example 1. The film thickness of the ITO layer formed was about 20 nm, and the surface resistance value after film formation was about 350 $\Omega$/sq. Also, the surface resistance value after heat treatment was about 280 $\Omega$/sq.
Evaluation results of this transparent electroconductive laminate are shown in Table 1.

[Example 4]

On one surface of the same melting-method polycarbonate (PC) film as Example 1, Coating Solution P3 was coated by a bar coating method, irradiated with an ultraviolet ray and thereby cured to form a cured resin layer having a thickness of 3 $\mu$m. Separately from this, for an indentation hardness test, a sample of a cured resin layer having a thickness of 5 $\mu$m was prepared by the same method.
Furthermore, an ITO layer was formed in the same manner as Example 1. The film thickness of the ITO layer formed was about 20 nm, and the surface resistance value after film formation was about 350 $\Omega$/sq. Also, the surface resistance value after heat treatment was about 280 Ω/sq.

Evaluation results of this transparent electroconductive laminate are shown in Table 1.

[Example 5]

On one surface of the same melting-method polycarbonate (PC) film as Example 1, Coating Solution P4 was coated by a bar coating method, irradiated with an ultraviolet ray and thereby cured to form a cured resin layer having a thickness of 3 μm. Separately from this, for an indentation hardness test, a sample of a cured resin layer having a thickness of 5 μm was prepared by the same method.

Furthermore, an ITO layer was formed in the same manner as Example 1. The film thickness of the ITO layer formed was about 20 nm, and the surface resistance value after film formation was about 350 Ω/sq. Also, the surface resistance value after heat treatment was about 280 Ω/sq.

Evaluation results of this transparent electroconductive laminate are shown in Table 1.

[Example 6]

On one surface of the same melting-method polycarbonate (PC) film as Example 1, a liquid dispersion of carbon nanotube (CNT) (solid content: 10%, liquid dispersion in EtOH) was coated by a bar coating method to form an electroconductive layer having a thickness of 200 nm. Thereafter, Coating Solution P1 was coated on the electroconductive layer by a bar coating method, irradiated with an ultraviolet ray and thereby cured to form a cured resin layer having a thickness of 0.2 μm. Separately from this, for an indentation hardness test, a sample of a cured resin layer having a thickness of 5 μm was prepared by the same method.

The surface resistance value after film formation was about 150 Ω/sq.

Evaluation results of this transparent electroconductive laminate are shown in Table 1.

[Example 7]

A cured resin layer having a thickness of 3 μm was formed on a transparent organic polymer substrate by using Coating Solution P1 in the same manner as Example 1 except that a 100 μm-thick polycarbonate (PC) film prepared by a casting method ("PURE ACE" C110-100, produced by Teijin Chemicals, Ltd., weight average molecular weight: 42,500, tensile elongation at break: 170%) was used as the transparent organic polymer substrate.

Furthermore, an ITO layer was formed in the same manner as Example 1. The film thickness of the ITO layer formed was about 20 nm, and the surface resistance value after film formation was about 350 Ω/sq. Also, the surface resistance value after heat treatment was about 280 Ω/sq.

Evaluation results of this transparent electroconductive laminate are shown in Table 1.

[Example 8]

A cured resin layer having a thickness of 3 μm was formed on a transparent organic polymer substrate by using Coating Solution P1 in the same manner as Example 1, except that a 188 μm-thick polyethylene terephthalate (PET) film prepared by a melting method ("Teijin Tetron Film" OF W, produced by Teijin DuPont Films Japan Limited, weight average molecular weight: could not be measured because of insoluble in chloroform, tensile elongation at break: 120%) was used as the transparent organic polymer substrate.

Furthermore, an ITO layer was formed in the same manner as Example 1. The film thickness of the ITO layer formed was about 20 nm, and the surface resistance value after film formation was about 350 Ω/sq. Also, the surface resistance value after heat treatment was about 280 Ω/sq.

Evaluation results of this transparent electroconductive laminate are shown in Table 1.

[Example 9]

On one surface of the same melting-method polycarbonate (PC) film as Example 1, Coating Solution P5 was coated by a bar coating method, irradiated with an ultraviolet ray and thereby cured to form a cured resin layer having a thickness of 3 μm. Separately from this, for an indentation hardness test, a sample of a cured resin layer having a thickness of 5 μm was prepared by the same method.

Furthermore, an ITO layer was formed in the same manner as Example 1. The film thickness of the ITO layer formed was about 20 nm, and the surface resistance value after film formation was about 350 Ω/sq. Also, the surface resistance value after heat treatment was about 280 Ω/sq.

Evaluation results of this transparent electroconductive laminate are shown in Table 1.

[Example 10]

On one surface of the same melting-method polycarbonate (PC) film as Example 1, Coating Solution P6 was coated by a bar coating method, irradiated with an ultraviolet ray and thereby cured to form a cured resin layer having a thickness of 3 $\mu$m. Separately from this, for an indentation hardness test, a sample of a cured resin layer having a thickness of 5 $\mu$m was prepared by the same method.
Furthermore, an ITO layer was formed in the same manner as Example 1. The film thickness of the ITO layer formed was about 20 nm, and the surface resistance value after film formation was about 350 $\Omega$/sq. Also, the surface resistance value after heat treatment was about 280 $\Omega$/sq.
Evaluation results of this transparent electroconductive laminate are shown in Table 1.

[Comparative Example 1]

On one surface of the same polycarbonate (PC) film as Example 1, an acrylic ultraviolet ray curable resin (BEAMSET 575CB, produced by Arakawa Chemical Industries, Ltd., weight average molecular weight: 1,280) was coated by a bar coating method, irradiated with an ultraviolet ray and thereby cured to form a cured resin layer having a thickness of 3 $\mu$m. Separately from this, for an indentation hardness test, a sample of a cured resin layer having a thickness of 5 $\mu$m was prepared by the same method.
Furthermore, an ITO layer was formed in the same manner as Example 1. The film thickness of the ITO layer formed was about 20 nm, and the surface resistance value after film formation was about 350 $\Omega$/sq. Also, the surface resistance value after heat treatment was about 280 $\Omega$/sq.
Evaluation results of this transparent electroconductive laminate are shown in Table 1.

[Comparative Example 2]

On one surface of the same polycarbonate (PC) film as Example 1, Coating Solution P7 was coated by a bar coating method, dried at 30°C for 1 minute, then irradiated with an ultraviolet ray and thereby cured to form a cured resin layer having a thickness of 3.0 $\mu$m. Separately from this, for an indentation hardness test, a sample of a cured resin layer having a thickness of 5 $\mu$m was prepared by the same method.
Furthermore, an ITO layer was formed in the same manner as Example 1. The film thickness of the ITO layer formed was about 20 nm, and the surface resistance value after film formation was about 350 $\Omega$/sq. Also, the surface resistance value after heat treatment was about 280 $\Omega$/sq.
Evaluation results of this transparent electroconductive laminate are shown in Table 1.

[Comparative Example 3]

On one surface of the same polycarbonate (PC) film as Example 1, Coating Solution P8 was coated by a bar coating method, irradiated with an ultraviolet ray and thereby cured to form a cured resin layer having a thickness of 3 $\mu$m. Separately from this, for an indentation hardness test, a sample of a cured resin layer having a thickness of 5 $\mu$m was prepared by the same method.
Furthermore, an ITO layer was formed in the same manner as Example 1. The film thickness of the ITO layer formed was about 20 nm, and the surface resistance value after film formation was about 350 $\Omega$/sq. Also, the surface resistance value after heat treatment was about 280 $\Omega$/sq.
Evaluation results of this transparent electroconductive laminate are shown in Table 1.
[Table 1]

Table 1

| | | Example | | | | | | | | | | Comparative Example | | |
|---|---|---|---|---|---|---|---|---|---|---|---|---|---|---|
| | | 1 | 2 | 3 | 4 | 5 | 6 | 7 | 8 | 9 | 10 | 1 | 2 | 3 |
| Transparent organic polymer substrate | Resin material | PC | PC | PC | PC | PC | PC | PC | PET | PC | PC | PC | PC | PC |
| | Film formation method | melting method | melting method | melting method | melting method | melting method | melting method | casting method | melting method | melting method | melting method | melting method | melting method | melting method |
| | Thickness (μm) | 100 | 100 | 100 | 100 | 100 | 100 | 100 | 125 | 100 | 100 | 100 | 100 | 100 |
| | Tensile elongation at break (%) | 5 | 5 | 5 | 5 | 5 | 5 | 170 | 120 | 5 | 5 | 5 | 5 | 5 |
| | Weight average molecular weight | 18,500 | 18,500 | 18,500 | 18,500 | 18,500 | 18,500 | 42,500 | - | 18,500 | 18,500 | 18,500 | 18,500 | 18,500 |
| Cured resin layer | Resin | Resin P1 | Resin P1 | Resin P2 | Resin P3 | Resin P4 | Resin P1 | Resin P1 | Resin P1 | Resin P5 | Resin P6 | 575CB (acrylic) | Resin P7 | Resin P8 |
| | Weight average molecular weight | 3,600 | 3,600 | 2,600 | 3,600 | 3,600 | 3,600 | 3,600 | 3,600 | 4,900 | 2,000 | 1,280 | 650 | - |
| | Thickness (μm) | 3 | 8 | 3 | 3 | 3 | 0.2 | 3 | 3 | 3 | 3 | 3 | 3 | 3 |
| | Indentation modulus (N/mm2) | 5,400 | 5,400 | 5,600 | 5,700 | 5,390 | 5,400 | 5,400 | 5,400 | 5,250 | 5,770 | 5,880 | 5,820 | 5,800 |
| | Recovery ratio (%) | 41.7 | 41.7 | 46.8 | 47.7 | 46.5 | 41.7 | 41.7 | 41.7 | 40.7 | 52.5 | 61.0 | 57.3 | 56.2 |
| | Steel wool scratching property | B | B | A | A | B | B | B | B | C | A | A | A | A |
| Transparent electroconductive Layer | Composition | ITO | ITO | ITO | ITO | ITO | CNT | ITO | ITO | ITO | ITO | ITO | ITO | ITO |
| | Thickness (nm) | 20 | 20 | 20 | 20 | 20 | 200 | 20 | 20 | 20 | 20 | 20 | 20 | 20 |

(continued)

| | | | Example | | | | | | | | | | Comparative Example | | |
|---|---|---|---|---|---|---|---|---|---|---|---|---|---|---|---|---|
| | | | 1 | 2 | 3 | 4 | 5 | 6 | 7 | 8 | 9 | 10 | 1 | 2 | 3 |
| Transparent electroconductive laminate | | Layer constitution | $\alpha/\beta/\gamma$ | $\alpha/\beta/\gamma$ | $\alpha/\beta/\gamma$ | $\alpha/\beta/\gamma$ | $\alpha/\beta/\gamma$ | $\alpha/\beta/\gamma$ | $\alpha/\beta/\gamma$ | $\alpha/\beta/\gamma$ | $\alpha/\beta/\gamma$ | $\alpha/\beta/\gamma$ | $\alpha/\beta/\gamma$ | $\alpha/\beta/\gamma$ | $\alpha/\beta/\gamma$ |
| | | Thickness ($\mu$m) | 103 | 108 | 103 | 103 | 103 | 100.2 | 103 | 128 | 103 | 103 | 103 | 103 | 103 |
| | Flex resistance | Cracking of substrate | A | A | A | A | A | A | A | A | A | A | C | C | C |
| | | Percentage change of resistance | A (<1%) | A (<1%) | A (5%) | A (7%) | A (5%) | A (2%) | A (<1%) | A (21%) | B (32%) | A (14%) | (could not be measured due to breakage) | (could not be measured due to breakage) | (could not be measured due to breakage) |
| | Sliding durability ($\times$10000) | | 50< | 50< | 50< | 50< | 50< | 30 | 50< | 50< | 30 | <10 | 50< | 50< | 50< |

*1: $\alpha$: Transparent organic polymer substrate, $\beta$: cured resin layer, and $\gamma$: transparent electroconductive layer ($\gamma$).

As apparent from Table 1, all of transparent electroconductive laminates of Examples had good bending durability. Also, touch panels using the transparent electroconductive laminates of Examples 1 to 9 exhibited good sliding durability. On the other hand, the transparent electroconductive laminates of Comparative Examples 1 to 3 were bad in the bending durability, and the substrate was broken at the bending durability test. Furthermore, since the substrate was broken at the bending durability test, the percentage change of resistance could not be evaluated.

Also, in order to evaluate the correlation between the recovery ratio (%) of the cured resin layer and the bending durability of the laminate, Examples 1, 3 to 5, 9 and 10 and Comparative Examples 1 to 3 are arranged in order of increasing the recovery ratio (%) and shown in Table 2 below (in the above Examples and Comparative Examples, 100 μm-thick polycarbonate substrates obtained by a melting method were used, the thicknesses of the cured resin layers were 3 μm, and ITO was used for the transparent electroconductive layers).

[Table 2]

Table 2

| | | Example | | | | | | Comparative Example | | |
|---|---|---|---|---|---|---|---|---|---|---|
| | | 9 | 1 | 5 | 3 | 4 | 10 | 3 | 2 | 1 |
| Recovery Ratio (%) | | 40.7 | 41.7 | 46.5 | 46.8 | 47.7 | 52.5 | 56.2 | 57.3 | 61 |
| Bending durability | Cracking of substrate | A | A | A | A | A | A | C | | |
| | Percentage change of resistance | B (32%) | A (<1%) | A (5%) | A (5%) | A (7%) | A (14%) | (could not be measured due to breakage) | | |

As apparent from Table 2, when the recovery ratio of the cured resin layer was too large, cracking of the substrate was generated (Comparative Examples 3, 2 and 1).

Also, as the recovery ratio of the cured resin layer became smaller, cracking of the substrate was not generated, and at the same time, the percentage change of resistance of the transparent electroconductive layer was became smaller (Examples 1, 5, 3, 4 and 10). It is considered that the percentage change of resistance is decreased, because, due to the small recovery ratio of the cured resin layer, cracking of the substrate, as well as cracking of the transparent electroconductive layer, was suppressed.

Furthermore, when the recovery ratio of the cured resin layer was more reduced, the percentage change of resistance of the transparent electroconductive layer was increased (Example 9). It is considered that the percentage change of resistance is increased, because, due to the small recovery ratio of the cured resin layer, the cured resin layer underwent large plastic deformation at the bending of the laminate, and when the laminate was returned from its bent state, waving deformation was generated in the cured resin layer portion, which caused a change in the resistance value of the transparent electroconductive layer.

DESCRIPTION OF REFERENCE NUMERALS

    1 Transparent organic polymer substrate
    2 Cured resin layer
    3 Transparent electroconductive layer
    10 Transparent electroconductive laminate

**Claims**

**1.** A transparent electroconductive laminate, comprising a transparent organic polymer substrate, and a cured resin layer and a transparent electroconductive layer which are stacked on at least one surface of the substrate,
wherein the resin composition constituting said cured resin layer has a recovery ratio ($\eta_{IT}$) represented by the following formula of 55% or less, with respect to a 5 μm-thick cured resin layer and an indentation hardness test in accordance with ISO14577-1:2002 (test load: 1 mN):

$$\eta_{IT} = W_{elast}/W_{total} \times 100 \quad (\%)$$

(wherein $W_{elast}$: an indentation work (Nm) due to elastic return deformation, and
$W_{total}$: a mechanical indentation work (Nm)).

2. The transparent electroconductive laminate according to claim 1, wherein said recovery ratio ($\eta_{IT}$) is 30% or more.

3. The transparent electroconductive laminate according to claim 1 or 2, wherein the resin composition constituting said cured resin layer has an indentation modulus of 3,000 N/mm$^2$ or more, with respect to a 5 $\mu$m-thick cured resin layer and an indentation hardness test in accordance with ISO14577-1:2002 (test load: 1 mN).

4. The transparent electroconductive laminate according to any one of claims 1 to 3, wherein the resin composition constituting said cured resin layer is an active energy ray-curable resin composition containing the following component (A):

(A) a polyurethane poly(meth)acrylate oligomer, obtained by reacting the following (a1) to (a3) and having the weight average molecular weight (GPC measurement, in terms of polystyrene) of from 2,500 to 5,000:

(a1) a linear diol having a carbon number of 1 to 5,
(a2) an alicyclic diisocyanate, and
(a3) a monohydroxy poly(meth)acrylate.

5. The transparent electroconductive laminate according to claim 4, wherein the resin composition constituting said cured resin layer is an active energy ray-curable resin composition containing said component (A) and the following component (B), with the blending ratio (by mass) [(A)/{(A)+(B)}] of from 0.6 to 1.0:

(B) a polyester poly(meth)acrylate monomer having three or more (meth)acryloyl groups per molecule.

6. The transparent electroconductive laminate according to any one of claims 1 to 5, wherein, on at least one surface of said organic polymer substrate ($\alpha$), said cured resin layer ($\beta$) and said transparent electroconductive layer ($\gamma$) are stacked in any one order of $\alpha/\beta/\gamma$, $\alpha/\gamma/\beta$ and $\alpha/\beta/\gamma/\beta$.

7. The transparent electroconductive laminate according to any one of claims 1 to 6, wherein the tensile elongation at break of said transparent organic polymer substrate is 20% or less.

8. The transparent electroconductive laminate according to any one of claims 1 to 7, wherein said transparent organic polymer substrate is one produced by a melting method.

9. The transparent electroconductive laminate according to any one of claims 1 to 8, wherein said transparent organic polymer substrate is on made of an aromatic polycarbonate.

10. The transparent electroconductive laminate according to claim 9, wherein said transparent organic polymer substrate is one made of an aromatic polycarbonate having a weight average molecular weight of 20,000 or less.

11. A transparent electroconductive laminate, comprising a transparent organic polymer substrate, and a cured resin layer and a transparent electroconductive layer which are stacked on at least one surface of the substrate, wherein the resin composition constituting said cured resin layer is an active energy ray-curable resin composition containing the following component (A):

(A) a polyurethane poly(meth)acrylate oligomer, obtained by reacting the following (a1) to (a3) and having the weight average molecular weight (GPC measurement, in terms of polystyrene) of from 2,500 to 5,000:

(a1) a linear diol having a carbon number of 1 to 5,
(a2) an alicyclic diisocyanate, and
(a3) a monohydroxy poly(meth)acrylate.

**12.** The transparent electroconductive laminate according to claim 11, wherein the resin composition constituting said cured resin layer is an active energy ray-curable resin composition containing said component (A) and the following component (B), with the blending ratio (by mass) [(A)/{(A)+(B)}] of from 0.6 to 1.0:

(B) a polyester poly(meth)acrylate monomer having three or more (meth)acryloyl groups per molecule.

**13.** A transparent touch panel having, as at least one transparent electrode substrate, the transparent electroconductive laminate of any one of claims 1 to 12.

**14.** A method for producing a transparent electroconductive laminate, comprising stacking a curable resin layer and a transparent electroconductive layer on at least one surface of a transparent organic polymer substrate, wherein the resin composition constituting said curable resin layer is an active energy ray-curable resin composition containing the following component (A):

(A) a polyurethane poly(meth)acrylate oligomer, obtained by reacting the following (a1) to (a3) and having the weight average molecular weight (GPC measurement, in terms of polystyrene) of from 2,500 to 5,000:

(a1) a linear diol having a carbon number of 1 to 5,
(a2) an alicyclic diisocyanate, and
(a3) a monohydroxy poly(meth)acrylate.

**15.** The method for producing a transparent electroconductive laminate according to claim 14, wherein said resin composition is an active energy ray-curable resin composition containing said component (A) and the following component (B), with the blending ratio (by mass) [(A)/{(A)+(B)}] of from 0.6 to 1.0:

(B) a polyester poly(meth)acrylate monomer having three or more (meth)acryloyl groups per molecule.

# Fig.1

## INTERNATIONAL SEARCH REPORT

| International application No. |
| --- |
| PCT/JP2012/059399 |

### A. CLASSIFICATION OF SUBJECT MATTER
*H01B5/14*(2006.01)i, *B32B7/02*(2006.01)i, *B32B27/30*(2006.01)i, *G06F3/041*(2006.01)i, *H01B13/00*(2006.01)i

According to International Patent Classification (IPC) or to both national classification and IPC

### B. FIELDS SEARCHED

Minimum documentation searched (classification system followed by classification symbols)
H01B5/14, B32B7/02, B32B27/30, G06F3/041, H01B13/00

Documentation searched other than minimum documentation to the extent that such documents are included in the fields searched
Jitsuyo Shinan Koho           1922-1996   Jitsuyo Shinan Toroku Koho   1996-2012
Kokai Jitsuyo Shinan Koho    1971-2012   Toroku Jitsuyo Shinan Koho   1994-2012

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2000-62074 A  (Mitsubishi Chemical Corp.), 29 February 2000 (29.02.2000), entire text (Family: none) | 1-15 |
| A | JP 2008-41364 A  (Nitto Denko Corp.), 21 February 2008 (21.02.2008), entire text & US 2010/0003502 A1    & EP 2048672 A1 & WO 2008/015840 A1 | 1-15 |
| A | JP 2006-152273 A  (Mitsubishi Chemical Corp.), 15 June 2006 (15.06.2006), entire text (Family: none) | 1-15 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 03 July, 2012 (03.07.12) | 10 July, 2012 (10.07.12) |

| Name and mailing address of the ISA/ Japanese Patent Office | Authorized officer |
| --- | --- |
| Facsimile No. | Telephone No. |

Form PCT/ISA/210 (second sheet) (July 2009)